# EUROPÄISCHE PATENTSCHRIFT

(11) **EP 2 976 533 B1**
(45) Veröffentlichungstag und Bekanntmachung des Hinweises auf die Patenterteilung: **12.08.2020**
(21) Anmeldenummer: 14712231.1
(22) Anmeldetag: 13.03.2014
(51) Int. Cl.: F04D 15/00, F16K 31/00, G05D 23/02

(54) **VENTIL UND PUMPENANORDNUNG MIT VENTIL**
VALVE AND PUMP ARRANGEMENT WITH VALVE
SOUPAPE ET SYSTÈME DE POMPE MUNI D'UNE SOUPAPE

(30) Priorität: 22.03.2013 DE 102013004908
(43) Veröffentlichungstag der Anmeldung: 27.01.2016
(73) Patentinhaber: KSB SE & Co. KGaA, 67227 Frankenthal (DE)
(72) Erfinder: NIEDERMEIER, Peter, 68199 Mannheim (DE)
(86) Internationale Anmeldenummer: PCT/EP2014/054935
(87) Internationale Veröffentlichungsnummer: WO 2014/146964

(56) Entgegenhaltungen:
- DE-A1- 3 447 102
- DE-A1- 3 804 183
- DE-A1- 3 814 519
- DE-A1-102006 047 003
- DE-U- 1 688 896
- US-A- 3 843 140
- US-A1- 2002 074 418
- US-A1- 2004 155 409

## Beschreibung

Die Erfindung betrifft eine Pumpenanordnung, insbesondere Kreiselpumpe, insbesondere Hauptkühlmittelpumpe für Kraftwerke, nach dem Oberbegriff des Anspruchs 1

Derartige Pumpen weisen mehrstufige hydrodynamische Dichtungssysteme mit einer sogenannten kontrollierten Leckage auf. Diese Gleitringdichtungssysteme ermöglichen eine definierte Druckteilung zwischen den Stufen des Gleitringdichtungssystems sowie die Abfuhr der Wärmeleistung der einzelnen Stufen, die mehrere Kilowatt beträgt. Die kontrollierte Leckage wird im Normalbetrieb von einem Sperrwassersystem überspeißt, das somit auch gegen das System sperrt und verhindert, dass heißes Fördermedium in das Dichtungsgehäuse eintritt. Um die Dichtungspartie vor hohen Temperaturen und - schocks zu schützen, muss sichergestellt werden, dass bei Nichtverfügbarkeit von Sperrwasser entweder das einbrechende Heißwasser gekühlt wird oder die Pumpe abgefahren wird und das Leckageventil geschlossen wird.

Die US 2004/0155409 A1 offenbart eine Anordnung in Verbindung mit einer mechanischen Dichtung, die mindestens zwei gegeneinander pressende Gleitflächen umfasst, die derart angeordnet sind, dass ein Spalt zwischen einem sich drehenden und einem sich nicht drehenden Maschinenteil gedichtet wird. Die Anordnung weist eine Einrichtung zur Bereitstellung eines die Gleitflächen kühlenden Dichtfluidstroms auf, wobei eine Ventileinrichtung in Verbindung mit der Einrichtung zur Bereitstellung eines kühlenden Dichtfluidstroms angeordnet ist, wobei der Betrieb der Ventileinrichtung auf einem-Memory-Metall-Element beruht, das angeordnet ist, um auf die Temperatur der Dichtung zu reagieren und den Dichtfluidstrom entsprechend dem Kühlbedarf zu öffnen und zu schließen.

Aus der DE 10 2006 047 003 A1 ist eine Dichtungsanordnung mit einem Dichtmittel zur Hermetisierung eines bewegten Maschinenelementes einer Kompressionskältemaschine mit Wasser als Arbeitsmittel bekannt, wobei das Dichtmittel mit dem Arbeitsmittel stofflich identisch ist. Die Dichtungsanordnung weist eine mit dem Dichtmittel gefüllte Sperrkammer auf, wobei mit dem Dichtmittel ein Druck in der Sperrkammer erzeugbar ist, der größer als der Druck in einer nicht hermetisierten Umgebung der Kompressionskältemaschine ist. Die Sperrkammer ist über eine Verbindungsleitung mit einem gegenüber der Umgebung offenen Behälter verbunden, in welchem ein Flüssigkeitsspiegel des Dichtmittels eine geodätische Höhendifferenz über der Sperrkammer aufweist.

Aus der DE 38 04 183 A1 ist eine Wellendichtung für Kreiselpumpen bekannt, die aus einer zwischen einer Dichtungskammer und der Atmosphäre angeordneten einfachwirkenden hydrodynamischen Gleitringdichtung und einer zwischen der Dichtungskammer und dem Pumpeninneren angeordneten Drosselstelle besteht, wobei in die Dichtungskammer ein der Kühlung und der Abführung von Schmutzteilchen dienender Zirkulationsstrom eingeleitet wird, welcher über die Drosselstelle zur Pumpenseite hin abgeführt wird. Die Drosselstelle ist als hydrodynamische Gleitringdichtung ausgebildet, welche durch einen die Dichtungskammer mit dem Pumpeninneren verbindenden, der gezielten Leckage dienenden Bypass überbrückt wird.

Eine hydrostatisch oder hydrodynamisch wirkende Wellendichtung, bestehend aus einem mit der Welle umlaufenden Ring und einem axial beweglichen statischen Ring, der über zwei O-Ringe gegen das Gehäuse abgedichtet ist und mit dem umlaufenden Ring radiale Dichtspalte bildet, durch die ein imkompressibles Fluid strömt und den Dichtspalt stabilisiert, ist aus der DE 34 47 102 A1 bekannt. Der statische Dichtring besitzt dabei einen Hohlraum zur Aufnahme der Sperr- bzw. Kühlflüssigkeit und eine Anzahl von auf dem Umfang angeordneten vorspannenden Federelementen, die sich gegen einen Ring abstützen, der die Funktion eines Druckbegrenzungsventils übernimmt.

Die DE 1 688 896 U offenbart eine Anordnung an Pumpenstopfbüchsen zur Schmierung und Ölabsaugung, wobei der Pumpendruck zur Stopfbüchse über ein einstellbares Regelorgan, beispielsweise Nadelventil oder Kegelventil, nach der Saugseite hin abgeleitet wird.

Aus der US 3,843,140 ist eine gekühlte Gleitringdichtung mit einer in ihrem Kühlkreislauf angeordneten Umwälzpumpe bekannt.

Die DE 38 14 519 A1 offenbart ein temperaturabhängiges Ventil mit einem von einem Fluid durchströmbaren Gehäuse, in dem eine abhängig von der Fluidtemperatur dehn- und zusammenziehbare erste Schraubenfeder mit Formgedächtnis-Effekt, die sich am Gehäuse abstützt und das Schließen und Öffnen des Ventils bewirkt, und eine weitgehend temperaturunempflichliche zweite Schraubenfeder, die eine Vorbelastung der ersten Schraubenfeder bewirkt, koaxial angeordnet sind. Das Gehäuse weist einen Ventilsitz und ein Ventilverschlussstück auf, wobei sich die temperaturempfindliche erste Schraubenfeder einerseits am Gehäuse und andererseits an der dem Ventilsitz abgekehrten Seite des Ventilverschlussstücks abstützt, und sich die zweite Schraubenfeder einerseits am Gehäuse radial außerhalb des Ventilsitzes und andererseits auf der dem Ventilsitz zugekehrten Seite des Ventilverschlussstücks abstützt und der Schließkraft der ersten Schraubenfeder entgegenwirkt. Dabei weist das Ventilverschlussstück Durchbrüche vom Innenraum der ersten Schraubenfeder zu einem Ringraum innerhalb der zweiten Schraubenfeder und radial außerhalb des Ventilsitzes auf.

Die Aufgabe der Erfindung besteht darin, eine Vorrichtung zu schaffen, die bei Ausfall der Sperrwasserzufuhr ein selbstständiges Blockieren der kontrollierten Leckage herbeiführen und im Weiteren Verlauf blockiert halten kann.

Die Aufgabe der Erfindung wird gelöst durch ein im zweiten Leitungssystem angeordnetes Schutzventil zum Blockieren des aus der Kammer abgeführten Leckagestroms, wenn dieser eine bestimmte Temperatur erreicht hat, und eine zum Schutzventil parallel geschaltete Absperrarmatur, wobei das Öffnen des Schutzventils nach Absinken der Temperatur nur über das Öffnen der Absperrarmatur und dem damit verbundenen Druckabbau vor dem Schutzventil oder dem Absinken des Systemdrucks möglich ist.

Bei einer bevorzugten Umsetzung der Pumpenanordnung ist in der Kammer ein mehrstufiges hydrodynamisches Dichtungssystem vorgesehen, das die Kammer sicher abdichtet.

In besonderer Ausgestaltung weist das Dichtungssystem mehrere federgelagerte Gleitringdichtungen auf.

Die Sicherheit des Dichtungssystems wird weiter erhöht, wenn das Dichtungssystem eine druckgesteuerte im Betrieb offene Dichtung, insbesondere Stickstoffdichtung, Wasserdichtung oder dergleichen, aufweist.

Eine besonders gute Wirkungsweise wird erreicht, wenn über eine Leitung Medium aus dem Leckagestrom entnommen und einem Druckraum in der innerhalb der Kammer angeordneten Dichtung zugeführt wird.

Da das einmal geschlossene Schutzventil nicht in der Lage ist von selbst zu öffnen, solange ein Überdruck vor dem Schutzventil herrscht, ist parallel zum Schutzventil eine Absperrarmatur geschaltet.

Vorteilhafterweise umfasst das Schutzventil ein Ventilgehäuseteil, eine in dem Ventilgehäuseteil ausgebildete Ventilkammer, einen am Ventilgehäuseteil angeordneten Ventilgehäusedeckel, der eine mit der Ventilkammer kommunizierende Durchgangsbohrung aufweist. Ferner einen am Gehäusedeckel vorgesehen Ventilsitz, einen mit einem Ventilkegel und einer Anlagevorrichtung versehenen Ventilstößel, eine sich am Ventilgehäusedeckel abstützende und an der Anlagevorrichtung anliegende Federvorrichtung und auf der der Federvorrichtung gegenüberliegenden Seite der Anlagevorrichtung angeordnete sich bei Erwärmung ausdehnende thermoempfindliche Stellglieder.

Erfindungsgemäß sind die Stellglieder aus einer Formgedächtnislegierung hergestellt oder umfassen eine Bimetallanordnung. Dadurch ergibt sich eine vielfältige Ausgestaltungsmöglichkeit der Stellglieder.

Die Stellglieder können ring- oder hülsenförmig, ein- oder mehrteilig und/oder tellerfederartig ausgebildet sein, wodurch diese den Gegebenheiten in der Ventilkammer optimal anpassbar sind.

Bei einer vorteilhaften Weiterbildung der Erfindung weist das Ventilgehäuseteil einen Gehäuseabschnitt mit verringertem Innendurchmesser auf, der als Anlageschulter für die Stellglieder dient.

Erfindungsgemäß ist am an dem Ventilstößel zugewandten Innenumfang des Gehäuseabschnitts eine Axialnut und am Ventilstößel eine zur Axialnut parallel ausgerichtete Axialnut ausgebildet, in die eine Passfeder eingesetzt ist. Die somit gebildete Verdrehsicherung hat die Funktion, dass Ventilkegel und Ventilsitz immer an der gleichen Stelle aufeinandertreffen und die Stellglieder nicht verspannt werden.

Ausführungsbeispiele der Erfindung sind in der Zeichnung dargestellt und werden im Folgenden näher beschrieben. Es zeigt die
- Fig. 1: eine erfindungsgemäße Pumpenanordnung, die
- Fig. 2: den Längsschnitt durch ein in der Pumpenanordnung verwendeten Schutzventils, die
- Fig. 3: eine weitere Ausführungsform des Schutzventils im Längsschnitt, die
- Fig. 4: eine weitere Ausführungsform der Pumpenanordnung gemäß Fig.1.

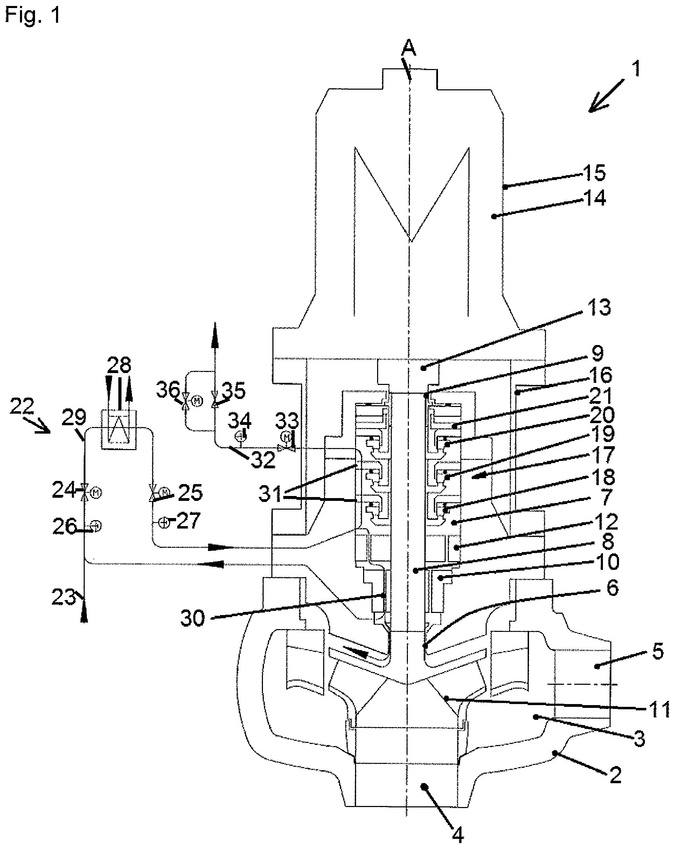

Die Fig. 1 zeigt eine Pumpenanordnung 1 in Form einer Hauptkühlmittelpumpe. Die Pumpenanordnung 1 weist ein Pumpengehäuse 2 auf. Das Pumpengehäuse 2 definiert einen Innenraum 3 mit einer Einlassöffnung 4 zum Ansaugen eines Fördermediums und einer Auslassöffnung 5 zum Ausstoßen des Fördermediums. Der Innenraum 3 ist über eine Öffnung 6 mit einer ebenfalls durch das Pumpengehäuse 2 definierten Kammer 7 verbunden.

Eine Laufradwelle 8 erstreckt sich von dem Innenraum 3 durch die Öffnung 6 in die Kammer 7 und endet nahe bei oder in einer der Öffnung 6 gegenüberliegenden Öffnung 9. Mittels einer in der Kammer 7, nahe der Öffnung 6, untergebrachten Lageranordnung 10 ist die Laufradwelle 8 um eine Drehachse A drehbar gelagert. An einem innerhalb des Innenraumes 3 liegenden Wellenende der Laufradwelle 8 ist ein Laufrad 11 befestigt. Innerhalb der Kammer 7 ist mit einem definierten Abstand zur Lageranordnung 10, ein Hilfslaufrad 12 an der Laufradwelle 8 befestigt. Das nahe der Öffnung 9 befindliche Wellenende der Laufradwelle 8 ist an eine koaxial zur Drehachse A angeordneten Antriebswelle 13 eines Antriebsmotors 14 angeschlossen, wobei das Gehäuse 15 des Antriebsmotors 14 mittels einer Laterne 16 mit dem Gehäuse 2 verbunden ist.

In der Kammer 7 ist ein mehrstufiges hydrodynamisches Dichtungssystem 17 vorgesehen, das mehrere federgelagerte Gleitringdichtungen 18, 19, 20 und bei Bedarf eine druckgesteuerte Dichtung 21, beispielsweise Stickstoffdichtung, Wasserdichtung oder dergleichen, die im Betrieb offensteht, aufweist. Das Dichtungssystem 17 dichtet die Kammer 7 an der Öffnung 9 fluiddicht gegenüber der Umgebung ab.

Während des Betriebs der Pumpenanordnung 1 speist ein wenigstens teilweise einen Fluidkreislauf bildendes Sperrwassersystem 22 über eine Zuleitung 23 zugeführtes Medium, beispielsweise Wasser mit gegebenenfalls zugesetzten Additiven nachfolgend Sperrwasser genannt, über ein mit mehreren Absperrarmaturen 24, 25, mehreren Temperatursensoren 26, 27 und einem Kühler 28 versehenen erstes Leitungssystem 29 in die Kammer 7 zwischen dem Hilfslaufrad 12 und dem Dichtungssystem 17 ein. Das Hilfslaufrad 12 fördert dabei einen Teil des Sperrwassers durch die Lageranordnung 10 hindurch. Das Sperrwasser kann dabei durch in der Lageranordnung 10 ausgebildete Kanäle 30 und/oder entlang der nicht dargestellten Gleitlagerflächen geführt werden. Zwischen der Lageranordnung 10 und der Öffnung 6 wird das Sperrwasser wieder aus der Kammer 7 herausgeführt, wobei ein geringer Teil noch in den Innenraum 3 gefördert wird. Das Sperrwasser verhindert somit das Eindringen des Fördermediums aus dem Innenraum 3 in die Kammer 7 und dient als Kühl- und Schmiermittel für die Lageranordnung 10.

Der andere, nicht durch die Lageranordnung 10 geführte Teil des Sperrwassers bildet einen kontrollierten Leckagestrom und wird über Umgehungskanäle 31 in den Gleitringdichtungen 18, 19 durch diese geführt. Durch in den Umgehungskanälen 31 eingebaute nicht gezeigte Drosselstrecken wird der Druck stufenweise reduziert und damit die Druckbelastung der Gleitringdichtungen 18, 19, 20 aufgeteilt. Die letzte Gleitringdichtung 20 vor der Dichtung 21 weist einen derartigen Umgehungskanal nicht auf. Der Leckagestrom wird zwischen Gleitringdichtung 19 und Gleitringdichtung 20 aus der Kammer 7 heraus und in ein zweites Leitungssystem 32 geführt. Nach dem Verlassen der Kammer 7 passiert der Leckagestrom eine Absperrarmatur 33, einen Temperatursensor 34 und ein Schutzventil 35, wobei eine weitere im Normalbetrieb geschlossene Absperrarmatur 36 parallel zum Schutzventil 35 geschaltet ist.

Ein Erreichen einer Temperatur des Leckagestroms von in der Regel 100°C ist mit einem automatischen Abfahren der Pumpenanordnung 1 verbunden. Dies führt zu einer Reduzierung der Temperatur des sich in der Kammer 7 befindenden Sperrwassers und des Leckagestroms, da Sperrwasser zur Kühlung in die Kammer 7 gepumpt wird.

Bei einer Störung im Sperrwassersystem 22, beispielsweise durch Ausbleiben des über die Zuleitung 23 zugeführten Sperrwassers, erhöht sich die Temperatur innerhalb der Kammer 7 jedoch weiter, da das in die Kammer 7 geförderte Sperrwasser nicht mehr gekühlt wird, oder heißes Fördermedium aus dem Innenraum 3 in die Kammer 7 eindringt. Erreicht das Sperrwasser in der Kammer 7 und somit der Leckagestrom eine bestimmte Temperatur, schließt das Schutzventil 35. Aufgrund der Bauart des Schutzventils 35 ist auch nach einem darauffolgenden Absinken der Temperatur ein Öffnen ausgeschlossen.

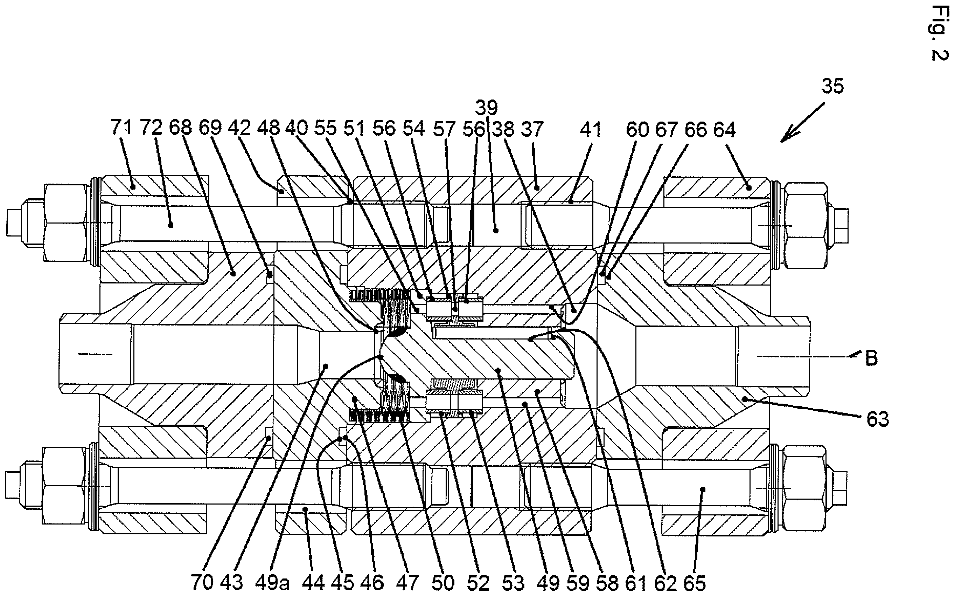

Eine in der Fig. 2 detailliert dargestellte Ausführungsform des Schutzventils 35 weist ein Ventilgehäuseteil 37 auf, das mit einer Ventilkammer 38 und mehreren um die Ventilkammer 38 herum angeordneten Durchgangsbohrungen 39 versehen ist, wobei sich die Durchgangsbohrungen 39 parallel zu einer Mittellängsachse B des Ventilgehäuseteils 37 erstrecken. Die Durchgangsbohrungen 39 weisen an ihren Enden Bereiche 40, 41 mit Gewinde auf. An der der Absperrarmatur 33 aus Fig. 1 abgewandten Seite ist ein Ventilgehäusedeckel 42 angeordnet, der eine mit der Ventilkammer 38 kommunizierende Durchgangsbohrung 43 aufweist. Der Ventilgehäusedeckel 42 weist mehrere Durchgangsbohrungen 44 auf, die in Überdeckung mit den Durchgangsbohrungen 39 liegend ausgerichtet sind. An der dem Ventilgehäuseteil 37 zugewandten Seite weist der Ventilgehäusedeckel 42 eine konzentrisch zur Mittellängsachse B ausgebildete Ringnut 45 auf, in die eine Dichtungsvorrichtung 46, beispielsweise Spiralgrafitdichtung, O-Ring oder dergleichen, eingelegt ist und die Verbindungsstelle von Ventilgehäuseteil 37 und Ventilgehäusedeckel 42 fluiddicht abdichtet.

Der Ventilgehäusedeckel 42 weist einen in die Ventilkammer 38 ragenden ringartigen Vorsprung 47 auf, dessen freies Ende als Ventilsitz 48 ausgebildet ist, auf den ein in der Ventilkammer 38 platzierter Ventilstößel 49 mit seinem Ventilkegel 49a in Anlage bringbar ist. An dem Ventilgehäusedeckel 42 stützt sich eine Federvorrichtung 50, beispielsweise Tellerfederpaket, Federkäfig, Wellringfeder oder dergleichen, ab und befindet sich in Anlage an einer an dem Ventilstößel 49 ringartig ausgebildeten Anlagevorrichtung 51.

Auf der der Federvorrichtung 50 gegenüberliegenden Seite der Anlagevorrichtung 51 sind mehrere thermoempfindliche Stellglieder 52, 53 angeordnet, die sich bei Erwärmung in axialer Richtung, d.h. entsprechend der Mittellängsachse B, ausdehnen. Die Stellglieder 52, 53 sind beispielsweise aus einer Formgedächtnislegierung hergestellt oder umfassen eine Bimetallanordnung.

Bei Formgedächtnislegierungen mit Doppelwegeeffekt ziehen sich die Stellglieder 52, 53 bei Abkühlung wieder zusammen, bei Formgedächtnislegierungen mit Einwegeeffekt wird eine Kraft nur in einer Richtung erzeugt, wobei die Rückstellkraft dann von der Federvorrichtung aufgebracht wird.

Die Stellglieder 52, 53 können beispielsweise ring- oder hülsenförmig, ein- oder mehrteilig und/oder tellerfederartig ausgebildet sein. Mehrere Stellglieder 52, 53 umgeben dabei den Ventilstößel 49. In dem gezeigten Ausführungsbeispiel ist je ein Satz von Stellgliedern 52 bzw. 53 parallel und die Sätze mittels einer Haltevorrichtung 54 zueinander in Reihe geschaltet. Die Reihenschaltung ist vorteilhaft zur Erzeugung eines höheren Stellweges und Redundanz der Stellglieder, die Parallelschaltung zur Erzeugung von höheren Stellkräften.

Die Anlagevorrichtung 51 weist mehrere Durchgangsöffnungen 55 auf, die sich mit in den Stellgliedern 52, 53 vorhandenen Durchgangsöffnungen 56 und in der Haltevorrichtung 54 ausgebildeten Durchgangsöffnungen 57 überdecken.

Das Ventilgehäuseteil 37 weist einen Gehäuseabschnitt 58 mit verringertem Innendurchmesser auf, der als Anlageschulter für die Stellglieder 53 dient. Der Innendurchmesser des Gehäuseabschnitts 58 ist ein wenig größer als der Ventilstößel 49, sodass dieser entlang der Mittellängsachse B gut hin und her bewegbar ist. Der Gehäuseabschnitt 58 weist ebenfalls Durchgangsöffnungen 59 auf, die wiederum mit den Durchgangsöffnungen 55, 56, 57 in einer Flucht liegen, sodass der kontrollierte Leckagestrom während des normalen Betriebs ungehindert durch das Schutzventil strömen kann.

Zur Erzeugung einer möglichst schnellen und gleichmäßigen Durchwärmung der Stellglieder 52, 53 können die Durchgangsöffnungen 55, 56, 57, 59 so angeordnet werden, dass sie sich axial nicht überdecken.

Damit sich der Ventilstößel 49 innerhalb der Ventilkammer 38 nicht drehen kann und die Durchgangsöffnungen 55, 56, 57, 59 nicht mehr in einer Flucht liegen, ist am an dem Ventilstößel 49 zugewandten innenumfang des Gehäuseabschnitts 58 eine Axialnut 60 und am Ventilstößel 49 eine zur Axialnut 60 parallel ausgerichtete Axialnut 61 ausgebildet, in die eine Passfeder 62 eingesetzt ist. Die Verdrehsicherung hat außerdem die Funktion, dass Ventilkegel 49a und Ventilsitz 48 immer an der gleichen Stelle aufeinandertreffen und dass die Stellglieder 52, 53 nicht verspannt werden.

Zum Anschließen des Schutzventils 35 an das in der Fig. 1 gezeigte zweite Leitungssystem 32 ist an der Stirnseite des Ventilgehäuseteils 37 ein sogenannter Bund 63 angeordnet, der mittels ein an der dem Ventilgehäuseteil 37 gegenüberliegenden Seite angeordneten Losflansch 64 und mittels in die Gewinde im Bereich 41 des Ventilgehäuseteils 37 einschraubbare Schrauben oder Gewindebolzen 65 mit dem Ventilgehäuseteil 37 verspannt wird. Der Bund 63 weist an der dem Ventilgehäuseteil 37 zugewandten Seite eine Ringnut 66 auf, in der eine Dichtungsvorrichtung 67 angeordnet ist und die Verbindungsstelle von Ventilgehäuseteil 37 und Bund 63 fluiddicht abdichtet. Der Bund 63 wird dann an ein Rohrelement des zweiten Leitungssystems 32 angeschweißt.

Auf die gleiche Weise wird ein Bund 68 mit einer Ringnut 69 und einer Dichtungsvorrichtung 70 mittels eines Losflansches 71 und mehrerer Schrauben oder Gewindebolzen 72 mit dem Ventilgehäusedeckel 42 verspannt und an ein Rohrelement des zweiten Leitungssystems 32 angeschweißt.

Bei einer alternativen Ausführungsform sind der Bund 63 und der Bund 68 an das Ventilgehäuseteil 37 oder den Ventilgehäusedeckel 42 angeschweißt. Bei einer weiteren Ausführungsform sind der Bund 63 und das Ventilgehäuseteil 37 sowie der Bund 68 und der Ventilgehäusedeckel 42 einstückig ausgebildet.

Im Normalbetrieb wirkt die Federvorrichtung 50 gegen den Leckagestrom und verhindert das Verschließen des Schutzventils 35, da die Federkraft der Federvorrichtung 50 größer gewählt ist als die durch den Flüssigkeitsdruck auf den Ventilstößel 49 wirkende Kraft. Steigt die Temperatur des Leckagestroms infolge einer Störung im Sperrwasserkreislauf an, dehnen sich die Stellglieder 52, 53 in axialer Richtung aus und bewegen den Ventilstößel 49 über die Anlagevorrichtung 51 in Richtung Ventilsitz 48, wobei das Schutzventil 35 geschlossen und der Leckagestrom blockiert wird. Sobald das Ventil fast geschlossen ist, wirkt zu der Schließkraft der Stellglieder 52, 53 noch eine hydraulische Schließkraft auf den Stößel 49. Dadurch ist auch nach einem darauf folgenden Absinken der Temperatur ein Öffnen des Schutzventils 35 ausgeschlossen.

Ein Öffnen des Schutzventils 35 nach Absinken der Temperatur ist nur über das Öffnen der in der Fig. 1 gezeigten Absperrarmatur 36 und dem damit verbundenen Druckabbau vor dem Schutzventil 35 oder dem Absinken des Systemdrucks möglich. Das Federelement 50 kann dann den Ventilstößel 49 wieder in seinen Ausgangszustand zurückbringen und so die Funktionsfähigkeit wieder herstellen.

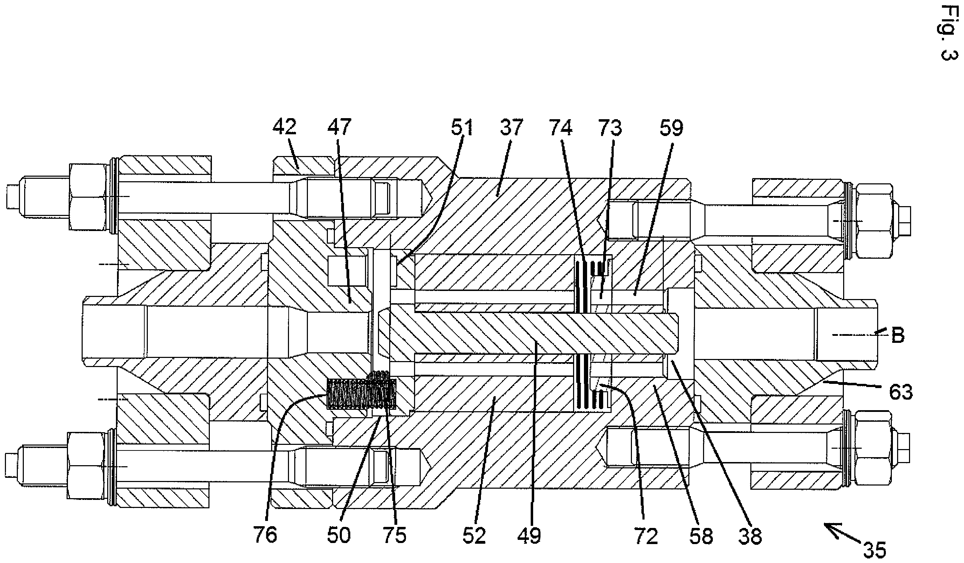

Die Fig. 3 zeigt eine weitere Ausführungsform des Schutzventils 35. Der Gehäuseabschnitt 58 mit den Durchgangsöffnungen 59 ist an der dem Bund 63 zugewandten Stirnseite des Ventilgehäuseteil 37 ausgebildet. Ein Führungselement 72 mit in einer Flucht mit den Durchgangsöffnungen 59 liegenden Durchgangsöffnungen 73 liegt in der Ventilkammer 38 an dem Gehäuseabschnitt 58 an. Das Führungselement 72 stabilisiert eine Stützfeder 74, die das thermoempfindliche Stellglied 52 an die Anlagevorrichtung 51 des Ventilstößels 49 drückt. Somit wird verhindert, dass sich das Stellglied 52, oder bei einer mehrteiligen Ausführung, Teile davon, bzw. der Ventilstößel 49 unkontrolliert in der Ventilkammer 38 hin und her bewegen oder sich verdrehen. Alternativ kann die Verdrehsicherung, wie zu Fig. 2 beschrieben ausgeführt sein. Durch Wahl eines geeigneten Abstands kann zwischen dem Stellglied 52 und dem Führungselement 72 ein Leerweg erzeugt werden, der zur Einstellung des Schaltpunktes und -kraftverhältnisses genutzt werden kann. Bei der vorliegenden Ausführungsform wird die Federvorrichtung 50 durch mehrere Schraubendruckfedern 75 gebildet, die in im Vorsprung 47 des Ventilgehäusedeckels 42 ausgebildeten Sacklöchern 76 angeordnet sind und gegen den Leckagestrom und die Federkraft der Stützfeder 74 wirken.

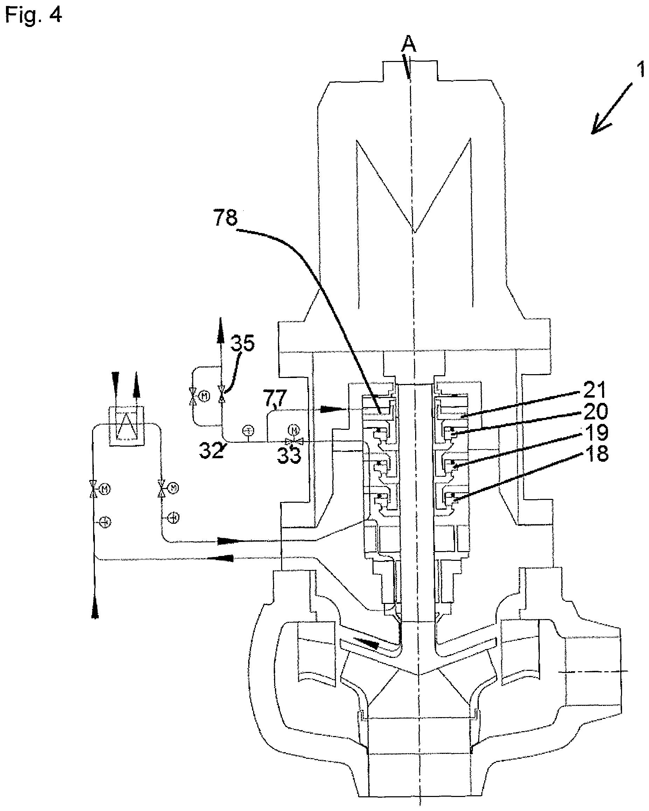

Die Fig. 4 zeigt eine Darstellung der Pumpenanordnung 1, die im Wesentlichen der in der Fig. 1 gezeigten Darstellung entspricht. Da eine Temperaturerhöhung der Leckage als gravierende Aggregatsstörung der einzige Fall ist, bei dem es zum Druckaufbau vor dem Schutzventil 35 kommt, kann der Druck im zweiten Leitungssystem 32 genutzt werden, eine gegebenenfalls vorhandene druckgesteuerte Dichtung 21 automatisch zu aktivieren und somit die Pumpenanordnung 1 hermetisch abzuriegeln und Dichtheit unabhängig von den Gleitringdichtungen 18, 19, 20 zu sichern. Dazu wird zwischen der Absperrarmatur 33 und dem Schutzventil 35 über eine Leitung 77 Medium aus dem Leckagestrom entnommen und einem Druckraum 78 in der innerhalb der Kammer 7 angeordneten Dichtung 21 zugeführt.

**Bezugszeichenliste**

| | | | |
|---|---|---|---|
| 1 | Pumpenanordnung | 29 | erstes Leitungssystem |
| 2 | Gehäuse | 30 | Kanal |
| 3 | Innenraum | 31 | Umgehungskanal |
| 4 | Einlassöffnung | 32 | zweites Leitungssystem |
| 5 | Auslassöffnung | 33 | Absperrarmatur |
| 6 | Öffnung | 34 | Temperatursensor |
| 7 | Kammer | 35 | Schutzventil |
| 8 | Laufradwelle | 36 | Absperrarmatur |
| 9 | Öffnung | 37 | Ventilgehäuseteil |
| 10 | Lageranordnung | 38 | Ventilkammer |
| 11 | Laufrad | 39 | Durchgangsbohrung |
| 12 | Hilfslaufrad | 40 | Bereich mit Gewinde |
| 13 | Antriebswelle | 41 | Bereich mit Gewinde |
| 14 | Antriebsmotor | 42 | Ventilgehäusedeckel |
| 15 | Motorgehäuse | 43 | Durchgangsbohrung |
| 16 | Laterne | 44 | Durchgangsbohrung |
| 17 | Dichtungssystem | 45 | Ringnut |
| 18 | Gleitringdichtung | 46 | Dichtungsvorrichtung |
| 19 | Gleitringdichtung | 47 | Vorsprung |
| 20 | Gleitringdichtung | 48 | Ventilsitz |
| 21 | Dichtung | 49 | Ventilstößel |
| 22 | Sperrwassersystem | 49a | Ventilkegel |
| 23 | Zuleitung | 50 | Federvorrichtung |
| 24 | Absperrarmatur | 51 | Anlagevorrichtung |
| 25 | Absperrarmatur | 52 | Stellglied |
| 26 | Temperatursensor | 53 | Stellglied |
| 27 | Temperatursensor | 54 | Haltevorrichtung |
| 28 | Kühler | 55 | Durchgangsöffnung |
| 56 | Durchgangsöffnung | 70 | Dichtungsvorrichtung |
| 57 | Durchgangsöffnung | 71 | Losflansch |
| 58 | Gehäuseabschnitt | 72 | Führungselement |
| 59 | Durchgangsöffnung | 73 | Durchgangsöffnung |
| 60 | Axialnut | 74 | Stützfeder |
| 61 | Axialnut | 75 | Schraubendruckfeder |
| 62 | Passfeder | 76 | Sackloch |
| 63 | Bund | 77 | Leitung |
| 64 | Losflansch | 78 | Druckraum |
| 65 | Gewindebolzen | | |
| 66 | Ringnut | | |
| 67 | Dichtungsvorrichtung | A | Drehachse |
| 68 | Bund | B | Mittellängsachse |
| 69 | Ringnut | | |

## Patentansprüche

1. Pumpenanordnung (1), insbesondere Kreiselpumpe, insbesondere Hauptkühlmittelpumpe für Kraftwerke, mit
- einem Pumpengehäuse (2), das einen Innenraum (3) mit einer Einlassöffnung (4) zum Ansaugen eines Fördermediums und einer Auslassöffnung (5) zum Ausstoßen des Fördermediums und eine mit dem Innenraum (3) verbundene Kammer (7) definiert,
- einem ein erstes Leitungssystem (29) umfassendes Sperrwassersystem (22) zum Zuführen von Sperrwasser in die durch das Pumpengehäuse (2) definierte Kammer (7) und
- einem zweiten Leitungssystem (32) zum Abführen eines kontrollierten Leckagestroms aus der durch das Pumpengehäuse (2) definierten Kammer (7) einem zweiten Leitungssystem (32) angeordneten Schutzventil (35) zum Blockieren des aus der Kammer (7) abgeführten Leckagestroms, wenn dieser eine bestimmte Temperatur erreicht hat,
**gekennzeichnet durch**
- eine zum Schutzventil (35) parallel geschaltete Absperrarmatur (36), wobei das Öffnen des Schutzventils (35) nach Absinken der Temperatur nur über das Öffnen der Absperrarmatur (36) und dem damit verbundenen Druckabbau vor dem Schutzventil (35) oder dem Absinken des Systemdrucks möglich ist.

2. Pumpenanordnung nach Anspruch 1, **dadurch gekennzeichnet, dass** in der Kammer (7) ein mehrstufiges hydrodynamisches Dichtungssystem (17) vorgesehen ist.

3. Pumpenanordnung nach Anspruch 2, **dadurch gekennzeichnet,**
**dass** das Dichtungssystem (17) mehrere federgelagerte Gleitringdichtungen (18, 19, 20) aufweist.

4. Pumpenanordnung nach einem der Ansprüche 2 oder 3, **dadurch gekennzeichnet,**
**dass** das Dichtungssystem (17) eine druckgesteuerte im Betrieb offene Dichtung (21), insbesondere Stickstoffdichtung, Wasserdichtung oder dergleichen, aufweist.

5. Pumpenanordnung nach Anspruch 4, **dadurch gekennzeichnet,**
**dass** über eine Leitung (77) Medium aus dem Leckagestrom entnommen und einem Druckraum (78) in der innerhalb der Kammer(7) angeordneten Dichtung (21) zuführbar ist.

6. Pumpenanordnung nach einem der Ansprüche 1 bis 5, **gekennzeichnet durch** ein Schutzventil (35) mit
- einer Mittellängsachse (B)
- einem Ventilgehäuseteil (37),
- einer in dem Ventilgehäuseteil (37) ausgebildeten Ventilkammer (38),
- einem am Ventilgehäuseteil (37) angeordneten Ventilgehäusedeckel (42), der eine mit der Ventilkammer (38) kommunizierende Durchgangsbohrung (43) aufweist,
- einem am Gehäusedeckel (42) vorgesehen Ventilsitz (48),
- einem mit einem Ventilkegel (49a) und einer Anlagevorrichtung (51) versehenen Ventilstößel (49),
- einer sich am Ventilgehäusedeckel (42) abstützenden und an der Anlagevorrichtung (51) anliegenden Federvorrichtung (50),
- auf der der Federvorrichtung (50) gegenüberliegenden Seite der Anlagevorrichtung (51) angeordneten sich bei Erwärmung ausdehnenden thermoempfindliche Stellgliedern (52, 53).

7. Pumpenanordnung nach Anspruch 6, **dadurch gekennzeichnet,**
**dass** die Stellglieder(52, 53) aus einer Formgedächtnislegierung hergestellt sind oder eine Bimetallanordnung umfassen.

8. Pumpenanordnung nach einem der Ansprüche 6 oder 7, **dadurch gekennzeichnet,**
**dass** die Stellglieder (52, 53) ring- oder hülsenförmig, ein- oder mehrteilig und/oder tellerfederartig ausgebildet sind.

9. Pumpenanordnung nach einem der Ansprüche 6 bis 8, **dadurch gekennzeichnet,**
**dass** das Ventilgehäuseteil (37) einen Gehäuseabschnitt (58) mit verringertem Innendurchmesser aufweist, der als Anlageschulter für die Stellglieder (53) dient.

10. Pumpenanordnung nach einem der Ansprüche 6 bis 9, **dadurch gekennzeichnet,**
**dass** am an dem Ventilstößel (49) zugewandten Innenumfang des Gehäuseabschnitts (58) eine Axialnut (60) und am Ventilstößel (49) eine zur Axialnut (60) parallel ausgerichtete Axialnut (61) ausgebildet ist, in die eine Passfeder (62) eingesetzt ist.

## Claims

1. Pump arrangement (1), in particular a centrifugal pump, in particular a main coolant pump for power stations, with
- a pump housing (2) which defines an interior (3) with an inlet opening (4) for aspirating a delivery medium and an outlet opening (5) for expelling the delivery medium, and which also defines a chamber (7) connected to the interior (3) ,
- a sealing water system (22) which comprises a first conduit system (29) and which serves for supplying sealing water to the chamber (7) defined by the pump housing (2),
- a second conduit system (32) which serves for discharging a controlled leakage flow from the chamber (7) defined by the pump housing (2),
- a protective valve (35) which is arranged in the second conduit system (32) and which serves for blocking the leakage flow discharged from the chamber (7) if said leakage flow has reached a particular temperature,
**characterized by**
- a shut-off fitting (36) connected in parallel to the protective valve (35), wherein the opening of the protective valve (35) after a fall in the temperature is possible only by means of the opening of the shut-off fitting (36) and the associated pressure drop upstream of the protective valve (35), or the drop in system pressure.

2. Pump arrangement according to Claim 1, **characterized in that** a multi-stage hydrodynamic sealing system (17) is provided in the chamber (7).

3. Pump arrangement according to Claim 2, **characterized in that** the sealing system (17) comprises a plurality of spring-mounted axial face seals (18, 19, 20) .

4. Pump arrangement according to either of Claims 2 and 3, **characterized in that** the sealing system (17) comprises a pressure-controlled seal which is open in operation (21), in particular a nitrogen seal, water seal or similar.

5. Pump arrangement according to Claim 4, **characterized in that** medium is extracted from the leakage flow via a conduit (77) and can be supplied to a pressure chamber (78) in the seal (21) arranged inside the chamber (7).

6. Pump arrangement according to any of Claims 1 to 5, **characterized by** a protective valve (35) with
- a longitudinal central axis (B),
- a valve housing part (37),
- a valve chamber (38) formed in the valve housing part (37),
- a valve housing cover (42) which is arranged on the valve housing part (37) and comprises a passage bore (43) communicating with the valve chamber (38),
- a valve seat (48) provided on the housing cover (42) ,
- a valve tappet (49) provided with a valve cone (49a) and a rest device (51),
- a spring device (50) supported on the valve housing cover (42) and lying on the rest device (51), and
- thermosensitive actuators (52, 53), which expand on heating, arranged on the side of the rest device (51) opposite the spring device (50).

7. Pump arrangement according to Claim 6, **characterized in that** the actuators (52, 53) are made from a shape-memory alloy or comprise a bimetal arrangement.

8. Pump arrangement according to either of Claims 6 and 7, **characterized in that** the actuators (52, 53) are configured as a ring or sleeve, of one or more pieces, and/or as a cup spring.

9. Pump arrangement according to any of Claims 6 to 8, **characterized in that** the valve housing part (37) has a housing portion (58) with reduced inner diameter which serves as a support shoulder for the actuators (53).

10. Pump arrangement according to any of Claims 6 to 9, **characterized in that** an axial groove (60) is formed on the inner periphery of the housing portion (58) facing the valve tappet (49), and an axial groove (61) oriented parallel to the axial groove (60) is formed on the valve tappet (49), wherein a parallel key (62) is inserted in said grooves.

## Revendications

1. Agencement de pompe (1), en particulier pompe centrifuge, en particulier pompe de réfrigérant primaire pour centrales, comprenant
- un carter de pompe (2) qui définit un espace intérieur (3) doté d'une ouverture d'entrée (4) pour l'aspiration d'un fluide à refouler et d'une ouverture de sortie (5) pour éjecter le fluide refoulé, et une chambre (7) connectée à l'espace intérieur (3),
- un système d'eau d'étanchéité (22) comprenant un premier système de conduite (29) pour acheminer de l'eau d'étanchéité dans la chambre (7) définie par le carter de pompe (2) et
- un deuxième système de conduite (32) pour évacuer un écoulement de fuite contrôlé hors de la chambre (7) définie par le carter de pompe (2),
- une soupape de protection (35) disposée dans le deuxième système de conduite (32) pour bloquer l'écoulement de fuite évacué de la chambre (7) lorsque celui-ci a atteint une température déterminée,
**caractérisé par**
- une armature de blocage (36) montée parallèlement à la soupape de protection (35), l'ouverture de la soupape de protection (35) après l'abaissement de la température n'étant possible que par le biais de l'ouverture de l'armature de blocage (36) et par le biais de la diminution de pression associée avant la soupape de protection (35) ou par le biais de la diminution de la pression du système.

2. Agencement de pompe selon la revendication 1, **caractérisé en ce qu'**un système d'étanchéité hydrodynamique à plusieurs étages (17) est prévu dans la chambre (7).

3. Agencement de pompe selon la revendication 2, **caractérisé en ce que** le système d'étanchéité (17) présente plusieurs garnitures mécaniques (18, 19, 20) supportées par ressort.

4. Agencement de pompe selon l'une quelconque des revendications 2 et 3, **caractérisé en ce que** le système d'étanchéité (17) présente un joint d'étanchéité (21) commandé par pression, ouvert pendant le fonctionnement, en particulier un joint d'étanchéité à l'azote, un joint d'étanchéité à l'eau ou similaire.

5. Agencement de pompe selon la revendication 4, **caractérisé en ce qu'**un fluide est prélevé de l'écoulement de fuite par le biais d'une conduite (77) et peut être acheminé à un espace de pression (78) dans le joint d'étanchéité (21) disposé à l'intérieur de la chambre (7).

6. Agencement de pompe selon l'une quelconque des revendications 1 à 5, **caractérisé par** une soupape de protection (35) comprenant
- un axe médian longitudinal (B),
- une partie de boîtier de soupape (37),
- une chambre de soupape (38) réalisée dans la partie de boîtier de soupape (37),
- un couvercle de boîtier de soupape (42) disposé au niveau de la partie de boîtier de soupape (37), qui présente un alésage traversant (43) communiquant avec la chambre de soupape (38),
- un siège de soupape (48) prévu au niveau du couvercle de boîtier (42),
- un poussoir de soupape (49) pourvu d'un cône de soupape (49a) et d'un dispositif d'appui (51),
- un dispositif de ressort (50) supporté sur le couvercle de boîtier de soupape (42) et s'appuyant contre le dispositif d'appui (51),
- des organes de réglage thermosensibles (52, 53) se dilatant sous l'effet de la chaleur, disposés du côté du dispositif d'appui (51) opposé au dispositif de ressort (50).

7. Agencement de pompe selon la revendication 6, **caractérisé en ce que** les organes de réglage (52, 53) sont fabriqués à partir d'un alliage à mémoire de forme ou d'un agencement bimétallique.

8. Agencement de pompe selon l'une quelconque des revendications 6 et 7, **caractérisé en ce que** les organes de réglage (52, 53) sont réalisés sous forme de bagues ou de douilles, en une ou plusieurs parties et/ou sous forme de ressort à coupelle.

9. Agencement de pompe selon l'une quelconque des revendications 6 à 8, **caractérisé en ce que** la partie de boîtier de soupape (37) présente une portion de boîtier (58) de diamètre intérieur réduit, qui sert d'épaulement d'appui pour les organes de réglage (53).

10. Agencement de pompe selon l'une quelconque des revendications 6 à 9, **caractérisé en ce qu'**au niveau de la périphérie intérieure de la portion de boîtier (58) tournée vers le poussoir de soupape (49) est réalisée une rainure axiale (60), et au niveau du poussoir de soupape (49) est réalisée une rainure axiale (61) orientée parallèlement à la rainure axiale (60), dans laquelle est inséré un ressort d'ajustement (62).
